(19) Europäisches Patentamt
European Patent Office
Office européen des brevets

(11) Publication number: **0 205 216 B1**

(12) **EUROPEAN PATENT SPECIFICATION**

(45) Date of publication of patent specification: **23.01.91**

(51) Int. Cl.[5]: **F 16 L 3/24**

(21) Application number: **86200989.1**

(22) Date of filing: **05.06.86**

(54) **Non-metallic strut system.**

(30) Priority: **10.06.85 US 743102**

(43) Date of publication of application:
**17.12.86 Bulletin 86/51**

(45) Publication of the grant of the patent:
**23.01.91 Bulletin 91/04**

(84) Designated Contracting States:
**DE GB IT**

(56) References cited:
**DE-B-1 147 641**
**GB-A-1 425 830**
**US-A-3 226 069**
**US-A-3 527 432**
**US-A-3 854 684**
**US-A-4 290 572**

(73) Proprietor: **Aickin Development Corporation**
**2901 West Commodore Way**
**Seattle, WA 98199-1237 (US)**

(72) Inventor: **Lindberg, Verne L.**
**10430 34th Drive S.E.**
**Everett, WA 98204 (US)**
Inventor: **Stockinger, Paul A.**
**5529 Cheyenne Loop Road S.**
**Tacoma, WA 98409 (US)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to a strut support system for piping, tubing, ducting or such, as defined in the introductory part of claim 1.

Such a strut support system is known from US-A-3 854 684 The support element and supporting bands of this known strut support system are all metallic.

In certain fields of the technique corrosion-proof support systems are necessary. Various grades of stainless steel strut and fasteners have been developed and are available at extremely high costs. Plated and coated steel systems have been developed from galvanizing, epoxy to PVC coatings. More recently, several fiberglass strut channels have been introduced, however, their struts are designed for metallic or metallic coated fastener systems.

The invention has for its object to provide a strut support system of the kind set forth above, which is fully corrosion-proof and furthermore is relatively inexpensive.

According to the invention this is achieved with the measures mentioned in the characterizing part of claim 1. By utilizing fiberglass for the support element and a thermoplastic material for the supporting bands, the strut support system according to the invention is fully corrosion-proof. By providing the supporting bands with a shape complemental to the interior of the support element with the inwardly projecting longitudinal flanges, the generally known difficulties encountered with using synthetic materials under load conditions, which difficulties are related to the relatively high flexibility of the material, are removed. At the one side the supporting band complements the support element to a closed form, at the point where the load is applied, which improves the rigidity of the support element itself. Furthermore, the complemental shape of the supporting bands has the effect that substantially no bending loads but mainly tensile loads occur in the supporting bands. Contrary to bending loads, tensile loads can be taken up reliably by thermoplastic material. By having the distal flanges of the supporting bands provided on two support members which are resilient relative to one another, the supporting bands can be snapped easily into the longitudinal slot of the support element, without using any tools.

These and other objects and advantages of the present invention will become more apparent from the following detailed description when taken in conjunction with the attached drawings.

Fig. 1 is assembly application in accordance with the present invention.

Fig. 2 is an elevation view of a support band of the present invention.

Fig. 3 is a sectional view of the support band and longitudinal channel partially in cross section in accordance with the present invention.

Fig. 4 is an elevation view in cross section of the support band showing the adjusting means.

Detailed Description of the Preferred Embodiment

Referring to the Figure 1, a pair of fiberglass channels 2 are shown. Channels 2 have longitudinal slots generally referred to as 4 and a pair of longitudinal flanges 6a and 6b. Flanges 6a and 6b project inwardly toward the center line of channel. 2. Channel 2 is considered to be a structural support element for the entire strut system. Referring to Figure 2, composite thermoplastic pipe supporting band generally designated as 7 is shown. Pipe supporting band 7 is comprised of a pair of supporting bands 8a and 8b used in the strut support system of the present invention. The complemental nature of this pair of support bands will be described subsequently.

Each of the pair of support bands 8a and 8b has a top portion, designated as 10a and 10b with two support members 12a and 12b. The support members 12a and 12b of support bands 8a and 8b have a pair of flanges 14a and 14b extending therefrom. The flanges 14a and 14b are used to engage the flanges 6a and 6b of the channel 2 when the strut system is in operation as shown best in Figure 3. The top portions of each support band 8a and 8b has a web 15 with a hole 17. The support bands 8a and 8b also have bottom portions generally designated as 16a and 16b. The bottom portion 16a and 16b of the support bands 8a and 8b have a natural complemental curvature to allow cradling of a pipe (not shown) when the ends of support band 8 are engaged. The bottom portion 16a of the support band 8a has a housing 18 with a screw 20 disposed therein. The bottom portion 16b of the other support band 8b has a series of thread slots designated as 22 (see Figure 4) capable of threadable engagement with the threads 24 of screw 20. The housing 18 is adapted to receive the slots 22 of support band 8b when locking and tightening of the support system is desired during operation. A hex 26 is molded on the end of screw 20 to allow adjustment of the support bands from the end opposite the head of screw 20.

In operation, the longitudinal channel 2 is appropriately hung in place, being supported to a ceiling (not shown) or the like by suitable conventional means. Each of the support bands 8a and 8b are manipulated by hand so that flanges 14a and 14b of top portion 10 of the support bands 8a and 8b are made to engage with flanges 4a and 4b of channel 2 A pipe to be supported is placed between the pair of bands 8a and 8b so that the curvature of the band 8a containing the bolt 20 and housing 18 is directed toward the curvature of band 8b containing the slots 22. The bottom portion of the band 8b is then pushed through the housing 18 contained on the other band 8a until the slots 22 engage threads 24. The pair of bands 8a and 8b can now be finally adjusted by driving the screw 20 with a screwdriver (not shown) or the like until the desired tightness around the pipe is achieved. Alternatively, Hex 26 can be driven to achieve the desired adjustment. The hex 26 gives the support system added flexibility with respect to access of an operator in adjusting the system.

The strut system can be used with any size pipe or ducting by increasing or decreasing the size of the channel 2 and the support bands 8a and 8b.

## Claims

1. Strut support system for pipes, tubes or ducts, comprising a structural support element (2) having a longitudinal slot (4) with two longitudinal flanges (6a, 6b) along the sides of said longitudinal slot (4), whereby the longitudinal flanges (6a, 6b) are projected inwardly towards the center line of said support element (2), the strut support system further comprising at least one pair of supporting bands (8a, 8b), each having a top portion (10a, 10b) capable of engaging in the longitudinal slot (4) and a bottom portion (16a, 16b), whereby each top portion (10a, 10b) is provided with two flanges (14a, 14b), each flange having a shape complemental to the interior of one of the inwardly projecting longitudinal flanges (6a, 6b) of the support element (2), such that the flanges (14a, 14b) of each supporting band (8a, 8b) are capable of engaging said longitudinal flanges (6a, 6b) of said support element (2), and whereby the bottom portions (16a, 16b) comprise an adjustable holding means (20, 22) for connecting and locking said support bands (8a, 8b) around a pipe, tube or duct, characterized in that said support element (2) is formed of fiberglass, and in that the supporting bands (8a, 8b) are made of thermoplastic material, and in that the flanges (14a, 14b) of each supporting band (8a, 8b) are linked with the respective supporting band (8a, 8b) by means of a pair of support members (12a, 12b), which are resilient relative to one another, so as to allow easy insertion of the top portions (10, 10b) into the longitudinal slot (4) of the support element (2).

2. The apparatus of claim 1, characterized in that said adjustable holding means includes a screw (20) disposed in a housing (13) connected to the bottom portion (16a) of one of said support bands (8a), and a series of thread slots (22) on the bottom portion (16b) of the other of said support bands (8b), said screw (20) and thread (22) capable of threadable engagement whereby driving said screw adjusts the diameter of the natural curvature of said bottom portions of said support bands (8a, 8b) when the bottom portion (16b) of the support band (8b) having the slots (22) is disposed and threadably engaged with said screw (20) in said housing (13).

3. The apparatus of claim 2, characterized by a hex (26) molded to the end of said screw (20) whereby adjustment of the diameter of the natural curvature of said bottom portions (16a, 16b) of said support bands (8a, 8b) can be done by driving said hex (26).

## Patentansprüche

1. Verstrebungs-Stützsystem für Rohre, Leitungen oder Durchführungen, mit einem strukturellen Stützbauteil (2) mit einer Längsnut (4) mit zwei entlang der Seiten der Längsnut (4) verlaufenden Längsflanschen (6a, 6b), wobei die Längsflansche (6a, 6b) nach innen zur Mittellinie des Stützbauteils (2) abstehen, wobei das Verstrebungs-Stützsystem weiter wenigstens ein Paar Stützbänder (8a, 8b) aufweist, von denen jedes ein Oberteil (10a, 10b), das geeignet ist, in die Längsnut (4) einzugreifen, und ein Unterteil (16a, 16b) aufweist, wobei jedes Oberteil (10a, 10b) mit zwei Flanschen (14a, 14b) versehen ist, die eine zur Innenseite der nach innen abstehenden Längsflansche (6a, 6b) des Stützbauteils (2) komplementäre Gestalt aufweisen, derart, daß die Flansche (14a, 14b) jedes Stützbandes (8a, 8b) an den Längsflanschen (6a, 6b) des Stützbauteils (2) angreifen können, und wobei die Unterteile (16a, 16b) eine einstellbare Haltevorrichtung (20, 22) zum Verbinden mit und Festlegen der Stützbänder (8a, 8b) rings einem Rohr, einer Leitung oder einer Durchführung aufweist, dadurch gekennzeichnet, daß das Stützbauteil (2) aus Glasfasermaterial ausgebildet ist und die Stützbänder (8a, 8b) aus einem thermoplastischen Material hergestellt sind, und daß die Flansche (14a, 14b) jedes Stützbandes (8a, 8b) mit dem jeweiligen Stützband (8a, 8b) mittels eines Paars von Stützgliedern (12a, 12b) verbunden sind, die relativ zueinander federnd nachgiebig sind, um so ein einfaches Einsetzen der Oberteile (10a, 10b) in die Längsnut (4) des Stützbauteils (2) zu ermöglichen.

2. Vorrichtung gemäß Anspruch 1, dadurch gekennzeichnet, daß die verstellbare Haltevorrichtung eine Schraube (20), die in einem mit dem Unterteil (16a) eines der Stützbänder (8a) verbundenen Gehäuse (13) angeordnet ist, und eine Mehrzahl von Schraubrillen (22) im Unterteil (16b) des anderen Stützbandes (8b) aufweist, wobei die Schraube (20) und die Schraubrillen (22) schraubend in Eingriff miteinander bringbar sind, wodurch durch das Drehen der Schraube der Durchmesser der natürlichen Krümmung der Unterteile der Stützbänder (8a, 8b) verstellt wird, wenn der mit den Rillen (22) versehene Unterteil (16b) des Stützbandes (8b) sich in dem Gehäuse (13) befindet und im Schraubeingriff mit der Schraube (20) steht.

3. Vorrichtung gemäß Anspruch 2, gekennzeichnet durch einen Sechskant (26), der am Ende der Schraube (20) ausgebildet ist, wodurch das Verstellen des Durchmessers der natürlichen Krümmung der Unterteile (16a, 16b) der Stützbänder (8a, 8b) durch Drehen des Sechskants (26) bewerkstelligbar ist.

## Revendications

1. Dispositif formant support d'entretoisement pour tuyauterie, tube ou conduit, comprenant un élément support de structure (2) possédant une fente longitudinale (4) comportant deux flancs longitudinaux (6a, 6b) s'étendant le long des côtés de la fente longitudinale (4), dans lequel les flancs longitudinaux (6a, 6b) font saillie intérieurement vers la ligne médiane de l'élément formant support (2), le dispositif formant support d'entretoisement comprenant en outre au moins une paire de bandes porteuses (8a, 8b), ayant chacune une partie supérieure (10a, 10b) susceptible d'être engagée dans la fente longitudinale (4) et une partie inférieure (16a, 16b), dans lequel chacune des parties supérieures (10a, 10b) est pourvue de deux brides (14a, 14b), chaque bride ayant une forme complémentaire de l'intérieur de l'un des flancs longitudinaux faisant saillie vers l'intérieur (6a, 6b) de l'élément support (2), de manière telle que les brides (14a, 14b) de chaque bande porteuse (8a, 8b) sont susceptibles d'être en prise avec les flancs longitudinaux (6a, 6b) de l'élément support (2), et dans lequel les parties inférieures (16a, 16b) comportent des moyens de retenue (20, 22) ajustables destinés à relier et à verrouiller les bandes porteuses (8a, 8b) autour d'un tuyau, d'un tube ou d'un conduit, caractérisé en ce que l'élément support (2) est formé de fibres de verre, et en ce que les bandes porteuses (8a, 8b) sont réalisées en matériau thermoplastique, et en ce que les brides (14a, 14b) de chaque bande porteuse (8a, 8b) sont reliées à la bande porteuse respective (8a, 8b) à l'aide d'une paire d'organes formant supports (12a, 12b) qui sont élastiques l'un par rapport à l'autre, de manière à faciliter l'insertion des parties supérieures (10a, 10b) dans la fente longitudinale (4) de l'élément support (2).

2. Dispositif selon la revendication 1, caractérisé en ce que les moyens de retenue ajustables comportent une vis (20) disposée dans un carter (13) relié à la partie inférieure (16a) d'une des bandes porteuses (8a) et une série de fentes formant filets (22) situées sur la partie inférieure (16b) de l'autre bande porteuse (8b), la vis (20) et le filet (22) étant susceptibles d'être mis en prise de vissage grâce à quoi l'entraînement de la vis ajuste le diamètre de la courbure naturelle des parties inférieures des bandes porteuses (8a, 8b) lorsque la partie inférieure (16b) de la bande porteuse (8b) comportant les fentes (22) est introduite dans le carter (13) et mise en prise de vissage avec la vis (20).

3. Dispositif selon la revendication 2, caractérisé en ce qu'il comporte une partie hexagonale (26) moulée à l'extrémité de la vis (20) grâce à quoi l'ajustement du diamètre de la courbure naturelle des parties inférieures (16a, 16b) des bandes porteuses (8a, 8b) peut être réalisé par mise en mouvement de ladite partie hexagonale (26).

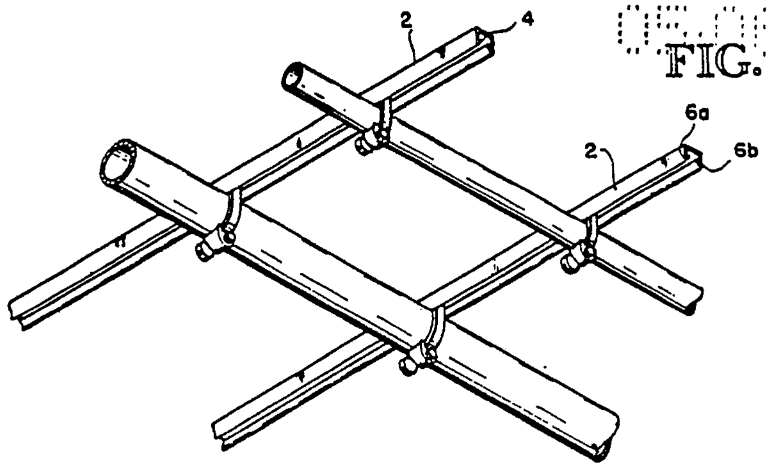


FIG. 1

FIG. 2

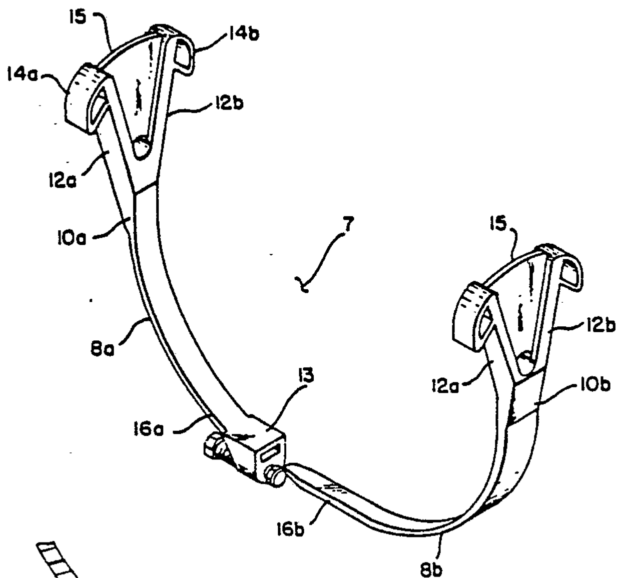


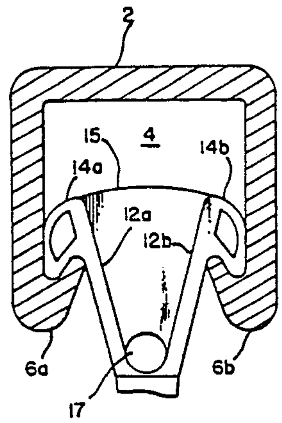


FIG. 3

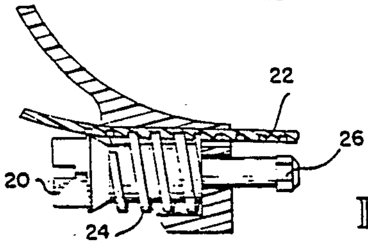


FIG. 4